# FASCICULE DE BREVET EUROPEEN

(11) **EP 1 839 944 B1**
(45) Date de publication et mention de la délivrance du brevet: **04.08.2010**
(21) Numéro de dépôt: 07005885.4
(22) Date de dépôt: 22.03.2007
(51) Int. Cl.: B60Q 1/56

(54) **Dispositif d'éclairage escamotable automatique pour plaque de police de véhicule**
Automatisch einziehbare Beleuchtungsvorrichtung für ein Kennzeichenschild eines Fahrzeugs
Automatic retractable lighting device for a license plate of a vehicle

(30) Priorité: 27.03.2006 FR 0602626
(43) Date de publication de la demande: 03.10.2007
(73) Titulaire: HITPOOL Systems, 92350 Le Plessis Robinson (FR)
(72) Inventeur: Louvel, Philippe, 92350 Le Plessis Robinson (FR)

(56) Documents cités:
- EP-A- 1 477 368
- EP-A1- 0 764 560
- WO-A-03/101779
- JP-A- 2 267 036
- US-A- 4 600 978
- US-A- 5 192 125
- US-A- 5 285 359

## Description

La présente invention concerne un système d'éclairage de plaque de police pour automobile. Ce système présente la particularité d'être escamotable : à l'état de repos, le dispositif d'éclairage est rétracté et présente alors un aspect lisse substantiellement sans saillie ni dépression par rapport à la carrosserie. Dans l'état actif, feux de position allumés, le dispositif est sorti et illumine la plaque de police. L'avantage de ce dispositif est de permettre une amélioration importante de l'aspect et du style de la zone de la plaque de police : il n'est plus nécessaire d'installer la plaque de police dans une zone en creux pour pouvoir l'éclairer. Il est ainsi possible de créer un style très épuré pour la partie arrière du véhicule.

Par ailleurs, le dispositif peut en outre porter le logo de la marque ainsi qu'une mise en valeur lumineuse de ce logo.

### ART ANTERIEUR

Classiquement la plaque de police est installée dans un renfoncement de plusieurs centimètres de profondeur dans le coffre ou le pare-choc arrière.

Un dispositif d'éclairage positionné en vis-à-vis de la face externe de la plaque de police permet de projeter un faisceau lumineux vers la plaque.

La position de la lampe (ou des lampes) d'éclairage peut être sous la plaque ou au dessus ou encore sur les cotés.

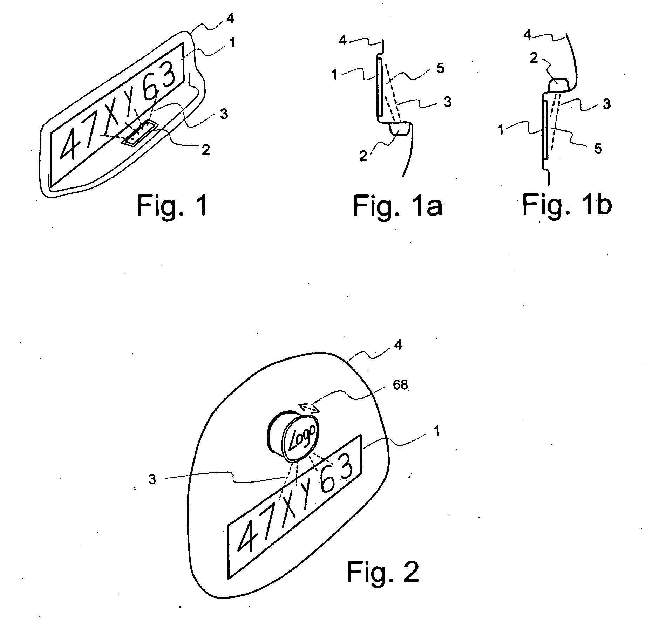

La figure 1 présente un exemple d'un tel dispositif classique, dans le cas de l'éclairage par la partie inférieure. La figure la représente un tel dispositif en coupe. La figure 1b présente un autre exemple en coupe dans le cas de l'éclairage par le dessus.

US5255166 et EP0598056. L'inconvénient de cette solution est que ses dimensions doivent être parfaitement adaptées à la taille de la plaque de police, or les tailles des plaques de police diffère d'un pays à l'autre.

Les brevets EP 1477368 et EP 1512583 délivrés à la société 3M présentent un dispositif de rétro éclairage de la plaque de police. Bien que cette solution permettent de supprimer le renfoncement de la carrosserie, l'inconvénient est qu'elle nécessite des plaques de police spéciales très différentes des plaques de police standard : leur coût est élevé et leur disponibilité aléatoire.

Il est aussi connu du document FR2678874 un dispositif d'éclairage escamotable qui comprend une position de repos et une position active en extension. Cependant, quand le dispositif est en extension, aucun moyen ne garantit le rappel de la partie mobile vers la bonne position en cas d'action extérieure ou de vibrations. Dans le cas d'une action extérieure ou d'un effort extérieur exercé sur la partie mobile une perte de position peut se produire ou une détérioration du dispositif peut intervenir.

### BREVE DESCRIPTION DE L'INVENTION

Ces dernières années, le style des automobiles est devenu un des critères majeurs de choix des consommateurs. Les constructeurs s'efforcent donc de proposer des styles de plus en plus attractifs. Dans cette démarche, il existe une tendance forte à l'épurement des lignes de style et de design des automobiles. Or, il est un point qui mérite une amélioration significative dans ce domaine, c'est la zone de la plaque de police arrière. L'éclairage de la plaque est obligatoire selon les différentes réglementations qui régissent l'industrie automobile. L'invention dévoilée ici permet de proposer une solution qui conjugue les 3 avantages suivants :
- elle autorise une forme un style très lisse substantiellement sans creux ni saillie
- elle s'adapte à différentes tailles de plaque de police
- elle est compatible avec les plaques de police standard des grands marchés mondiaux

Selon l'invention, le dispositif d'éclairage est une structure mobile. Cette structure mobile possède deux positions stables :
La première position est la position dite de repos, obtenue en l'absence de tension sur la ligne des feux de position. Dans cette position, le dispositif d'éclairage est escamoté, et la surface de la zone de la plaque de police est plane.
La deuxième position est la position dite active, obtenue suite à l'apparition de la tension sur la ligne des feux de position. Dans cette position le dispositif d'éclairage est en extension et fait saillie par rapport à la surface de la carrosserie: le dispositif d'éclairage, comprenant des diodes électroluminescentes, illumine alors la surface de la plaque de police.

Cette position active est flexible de sorte qu'il est toujours possible d'intervenir manuellement sur le dispositif pour le repousser momentanément vers sa position de repos. De même si un objet externe vient en contact avec le dispositif, le dispositif ne sera pas endommagé, il pourra être repoussé vers la position de repos, mais retrouvera sa position active dès que l'action extérieure cessera, ceci grâce à un dispositif de rappel à ressort.

La transition de la position repos vers la position active est générée par l'apparition de la tension sur la ligne d'alimentation des feux de position.

La transition de la position active vers la position repos est générée par la disparition de la tension sur la ligne d'alimentation des feux de position. L'énergie pour le transfert de la position active vers la position de repos est fournie soit par une capacité réservoir interne au circuit de commande soit par une alimentation positive permanente qui passe par un switch fin de course. Ce switch fin de course s'ouvre lorsque la position de repos est atteinte, assurant ainsi une consommation électrique nulle lorsque le système est au repos.

Pour motoriser le transfert d'une position à l'autre, le système fait appel à un actionneur électromécanique réversible, couramment utilisé dans l'état de l'art pour le verrouillage des portes.

Cet actionneur est mis en action uniquement lors des phases de transfert, et ne consomme aucune énergie dans les 2 positions stables.

La structure mobile qui se déplace d'une position à l'autre peut avoir un mouvement rectiligne ou un mouvement rotatif, les deux modes de réalisation sont décrits dans la suite de la description de l'invention.

En outre, l'invention permet la combinaison du dispositif d'éclairage avec la mise en valeur lumineuse du logo représentant la marque commerciale du véhicule.

### DESCRIPTION DETAILLEE DE L'INVENTION

L'invention sera mieux comprise à la lecture de la description qui suit, se référant à un exemple non limitatif, illustré par les dessins suivants :
- Les **figures 1, 1a et 1b** représentent des exemples de l'état de l'art, décrit en début de présentation
- La **figure 2** représente une vue d'ensemble en perspective de l'invention avec le dispositif d'éclairage en position active, dans son mode de réalisation préféré
- La **figure 3** représente une vue en coupe du dispositif à l'état de repos dans son mode de réalisation préféré
- La **figure 4** représente une vue en coupe du dispositif à l'état actif, dans son mode de réalisation préféré
- La **figure 5** représente une vue axiale du dispositif, vu de l'intérieur
- La **figure 6** représente une vue axiale du dispositif, vu de l'extérieur
- La **figure 7** représente une vue en coupe du dispositif à l'état actif et sous l'effet d'une action extérieure, dans son mode de réalisation préféré
- La **figure 8** représente un diagramme du schéma de principe électrique du dispositif, dans le cas d'une alimentation par 3 conducteurs
- La **figure 9** représente un diagramme de séquence sous forme de chronogramme illustrant les phases d'extension et de rétraction du dispositif dans le cas d'une alimentation par 3 conducteurs
- La **figure 10** représente un diagramme du schéma de principe électrique du dispositif, dans le cas d'une alimentation par 2 conducteurs
- La **figure 11** représente un chronogramme illustrant les phases d'extension et de rétraction du dispositif dans le cas d'une alimentation par 2 conducteurs
- La **figure 12** représente une vue en coupe du dispositif à l'état de repos dans un autre mode de réalisation
- La **figure 13** représente une vue en coupe du dispositif à l'état actif, dans un autre mode de réalisation
- La **figure 14** représente une vue axiale du dispositif, vu de l'extérieur, dans un autre mode de réalisation

Les éléments suivants sont les principaux éléments constitutifs du système et apparaissent sur la plupart des figures :
- La plaque de police à illuminer est notée : 1.
- La lampe d'éclairage illuminant la plaque de police est notée : 2
- Les diodes électroluminescentes illuminant la plaque de police sont notées 2a et 2b
- La tôle extérieure de la carrosserie du véhicule est notée : 4.
- La dépression où se situe la plaque de police dans les solutions classiques est notée : 5.

La **figure 2** montre une vue d'ensemble du mode de réalisation préféré de l'invention. Le dispositif d'éclairage est représenté en position active, c'est-à-dire en saillie par rapport à la carrosserie. En position repos, le dispositif d'éclairage se rétracte et vient se plaquer contre la tôle de la carrosserie. Grâce à l'invention, la tôle de la carrosserie 4 peut être extrêmement simple et on évite d'avoir à créer la zone en dépression qui se trouve dans toutes les réalisations classiques. En position rétracté, l'apparence est lisse et le rendu stylistique bien meilleur que toutes les réalisations classiques. La course 68 illustre l'écart entre la position de repos et la position active.

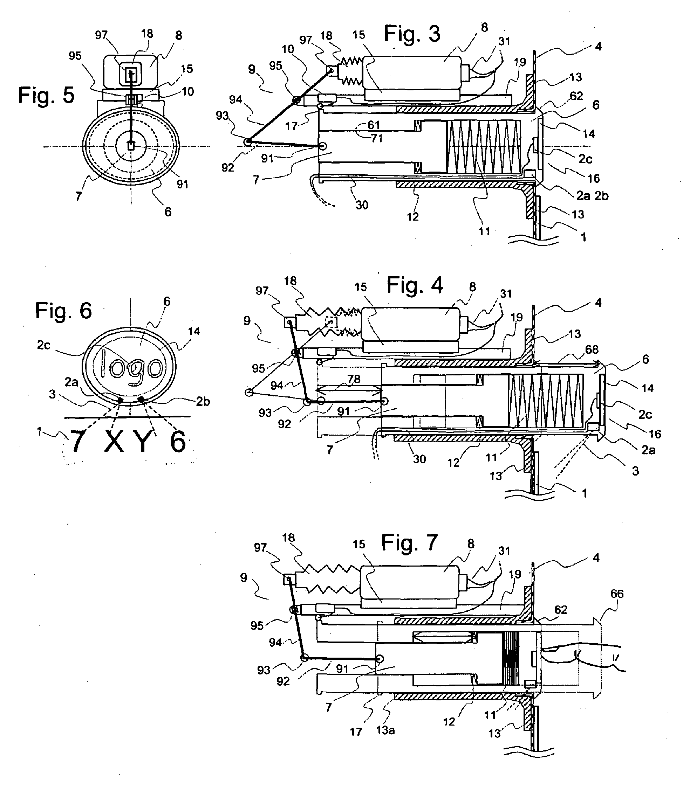

La **figure 3** représente une vue en coupe du dispositif à l'état de repos dans un mode de réalisation préféré.

La plaque de police 1 est fixée à même la tôle de la carrosserie 4 du véhicule, au dessous du dispositif d'éclairage. Le coulisseau 6 est guidé par le support 13, le support 13 étant fixé à la carrosserie. A l'intérieur du coulisseau 6, est positionné un ressort 11 qui travaille en compression. Ce ressort s'appuie d'une part sur la face interne du coulisseau 6 et d'autre part sur l'extrémité du piston 7. Le piston 7 coulisse à l'intérieur du coulisseau 6 sur les faces 61 et 71. Le ressort 12, de faible course, permet de rattraper les jeux et d'assurer le bon maintien du coulisseau en position rétracté, de manière à ce que le plaquage de l'épaulement 62 sur la peau de carrosserie 4 soit parfait. Le piston 7 est manoeuvré par un actionneur 8 et un système de transmission 9. Ce système de transmission 9 est composé d'une première biellette 92 qui est fixée sur le piston 7 au niveau de l'oeil 91, d'un articulation 93 qui relie la première biellette 92 à la deuxième biellette 94, cette biellette pivotant/coulissant autour d'un point fixe 95. L'autre extrémité de a biellette 94 est fixée à l'oeil 97 de la partie mobile de l'actionneur 8. L'actionneur possède en outre un soufflet de protection 18 et un connecteur d'alimentation électrique 31. L'actionneur est fixé sur un support 15, lui même fixé sur un support 19, solidaire du support 13 et qui supporte également le point de basculement 95 de la bielle 94.

Le switch de fin de course 10 est fixé sur le support 19 et capte la position fin de course du coulisseau 6 grâce à l'épaulement 17.

La zone de la face extérieure du coulisseau comprend : les diodes électroluminescentes 2a et 2b pour l'illumination de la plaque de police 1, une pièce translucide 14 diffuseur de lumière en polycarbonate par exemple, le logo de la marque 16, une diode électroluminescente 2c.

La **figure 4** représente une vue en coupe du dispositif à l'état actif dans un mode de réalisation préféré.

Les éléments décrits sur la figure 3 sont présents. Les écarts par rapport à la figure 3 sont : la position de l'actionneur est sortie, le système de biellette a basculé pour pousser le piston 7 vers la droite. Le coulisseau est à son tour poussé vers la position sortie par le ressort 11. La course 68 entre la position repos et la position active correspond au déplacement 78 du piston 7.

Les fils d'alimentation des Leds 2a 2b 2c passent dans un aménagement 30 du coulisseau et sortent par l'arrière du coulisseau.

La **figure 5** représente une vue axiale du dispositif vu de l'intérieur. On y voit notamment que la section du coulisseau est ovale, exemple non limitatif, dans la mesure où cette forme peut être quelconque et notamment être adaptée à la forme du logo de la marque. Le piston 7 est cylindrique.

La **figure 6** représente une vue axiale du dispositif, vu de l'extérieur. La disposition des Leds 2a et 2b permet d'avoir une bonne couverture de la plaque de police 1. Ceci est un exemple non limitatif : la position et le nombre des Leds peuvent être adaptés au besoin.

La **figure 7** représente une vue en coupe du dispositif à l'état actif dans un cas particulier où un effort extérieur est exercé sur le dispositif. On voit dans ce cas que le ressort 11 est compressé autorisant le recul du coulisseau 6 vers l'intérieur alors que le piston 7 reste immobile. La totalité de la course peut être ainsi parcourue, jusqu'à la butée naturelle 62 du coulisseau sur la carrosserie 4. Mais dès lors que l'effort extérieur cesse, le coulisseau est rappelé à sa position active maximum 66 par le ressort 11. Un épaulement 17 permet de parer à toute traction sur le dispositif, car l'épaulement vient en butée sur l'extrémité du support 13a et prévient tout déboîtement du dispositif.

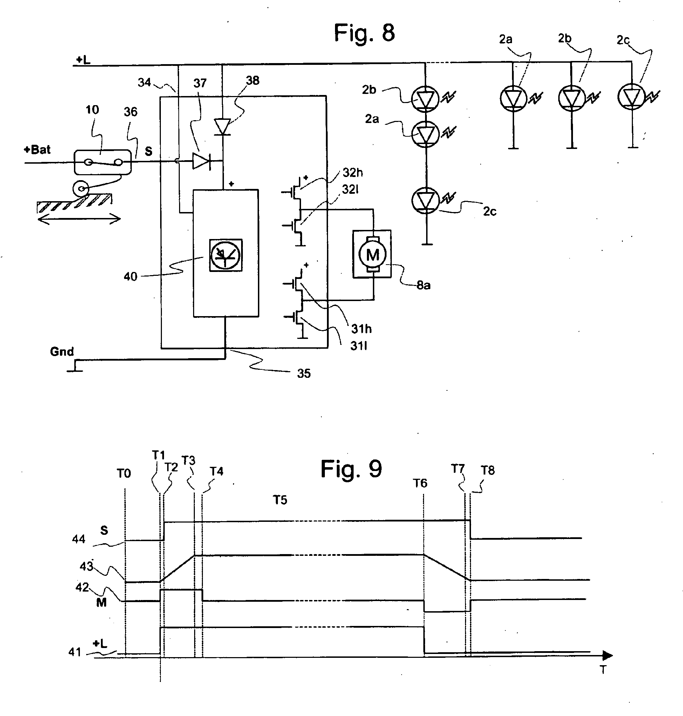

La **figure 8** représente un diagramme du schéma de principe électrique du dispositif alimenté par 3 conducteurs. La source de tension des feux de position est représentée la symbole "+L". La masse est nommée "Gnd" 35. L'alimentation servant à l'escamotage est un "+Bat" (+Batterie) permanent qui passe au travers su switch 10. Lorsque le dispositif est en position repos, le switch est ouvert électriquement et la tension sur la ligne "S" (36) est nulle. En revanche, lorsque le dispositif n'est pas en position de repos, alors le switch est fermé électriquement et la ligne S (36) est alimentée par la tension +Bat autorisant par exemple le mouvement de rétraction, alors que la tension +L a disparu. Les diodes 37 et 38 permettent d'alimenter le circuit de commande 40 par un 'ou' câblé entre la tension +L et la tension S. La ligne 34 permet de donner une copie de la tension +L au circuit de commande 40, afin de déclencher la phase de rétraction lorsque cette ligne 34 passe à l'état bas (disparition de la tension +L). Le circuit de commande pilote un pont en "H" constitué de 4 transistors 32h, 321, 31h, 311. Pour commander le moteur dans le sens extension par exemple, le circuit de commande active les transistors 32h et 31l. A l'inverse, pour commander le moteur dans le sens rétraction, le circuit de commande active les transistors 31h et 32l.

Le moteur 8a est situé dans l'actionneur 8.

Les Leds 2a, 2b et 2c sont alimentées directement par la tension +L, soit en série, soit en parallèle comme le montre la figure 8, mais ce ne sont que 2 exemples qui ne sont pas limitatifs.

La **figure 9** représente un diagramme de séquence sous forme de chronogramme illustrant les phases d'extension et de rétraction du dispositif, alimenté par 3 conducteurs.

Partant de l'état de repos, le premier événement T0 est l'apparition de la tension sur la ligne +L des feux de position (41). Cette tension alimente d'une part directement les diodes (Leds) mais aussi le 'ou' câblé d'alimentation du circuit de commande 40. Le circuit de commande pilote alors automatiquement le pont en H (42) du moteur 8a dans le sens extension pendant une temporisation suffisante (jusqu'à T4). La position 43 du coulisseau évolue de la position de repos à la position active, la butée étant atteinte à l'instant T3. Il est à noter que dès que le coulisseau quitte la position de repos le switch 10 passe à l'état électrique fermé et la ligne S (44) passe à l'état positive (alimentée).

La phase T5 est la phase stable où le dispositif est sorti et les leds allumées : il n'y a alors aucun changement d'état électrique. Le seul événement qui peut intervenir est une action extérieure manuelle qui pousse temporairement le dispositif vers la position de repos : le switch 10 peut alors changer d'état et la ligne S peut être désactivée, mais cela n'a pas de conséquences sur les autres états du système. La phase rétraction est déclenchée par la disparition de la tension +L à l'instant T6 sur la figure 9. Le circuit de commande pilote alors le moteur 8a dans le sens rétraction (42). La position du coulisseau évolue de la position sortie à la position rentrée. A l'instant T7, le switch est activé par l'épaulement 17 et passe à l'état ouvert électrique. La ligne S passe à l'état 0 et l'alimentation du circuit de commande cesse, chacune des branches du 'ou' câblé étant coupée (T8).

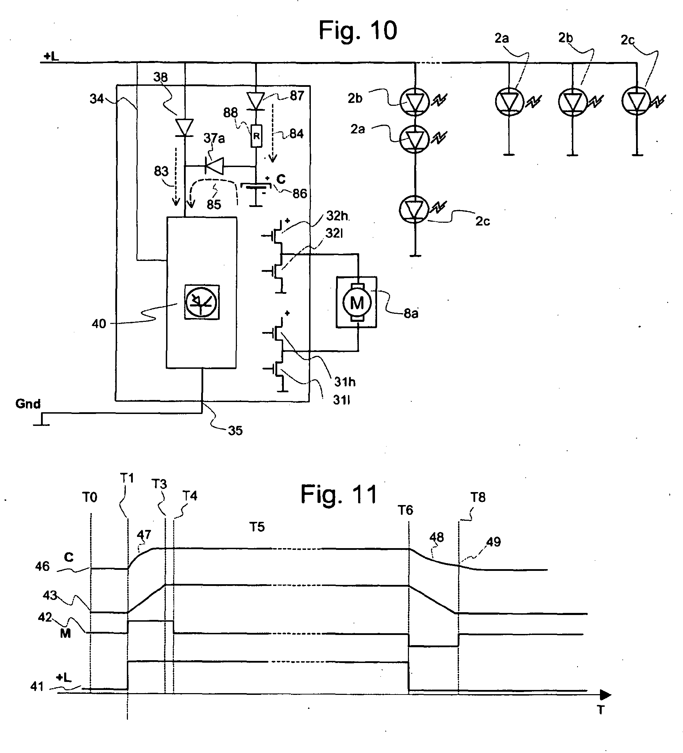

La **figure 10** représente un diagramme du schéma de principe électrique du dispositif alimenté par 2 conducteurs. La différence est qu'il n'y a pas d'alimentation +Bat permanente dans cette solution. La source d'énergie nécessaire au mouvement de rétraction est emmagasinée dans une capacité réservoir C qui se trouve dans le circuit de commande 40. Cette capacité 86 se charge au travers de la diode 87 et de la résistance 88 par le circuit de courant 84, la résistance servant à limiter le courant d'appel à l'apparition de la tension +L. Lorsque la tension +L est présente, le circuit de commande est alimenté en priorité par la ligne +L directe au travers de la diode 38, suivant le circuit de courant 83. Lorsque la tension +L disparaît, le circuit de commande est alimenté par la capacité réservoir C (86) au travers de la diode 37a, suivant le circuit de courant 85. La diode 38 empêche la capacité de se décharger dans les autres circuits.

La capacité est dimensionnée pour stocker assez d'énergie pour alimenter en énergie la course de l'actionneur 8 dans le sens rétraction.

Les autres éléments de la figure 10 sont identiques à ceux de la figure 8.

La **figure 11** représente un chronogramme illustrant les phases d'extension et de rétraction du dispositif, alimenté par 2 conducteurs.

La plupart des éléments et événements sont semblables à ceux de la figure 9 sauf celui qui concerne la chronogramme 46 de la capacité C. A l'instant T1 la capacité commence à se charger selon la courbe caractéristique habituelle 47. Elle reste chargée au maximum tant que la tension +L est présente. A l'instant T6, la tension +L disparaît, la ligne 34 passe à l'état bas ce qui déclenche la commande de rétraction et c'est alors la capacité qui fournit l'énergie au dispositif de rétraction.

Ce faisant elle se décharge selon la courbe 48. A l'instant T8 la commande de rétraction est stoppée selon une temporisation prédéfinie et suffisante. La charge résiduelle de la capacité 49 finit de se vider lentement.

Dans un autre mode de réalisation mécanique de l'invention, la structure mobile se déplace en rotation d'une position de repos à une position active. Le principe de base et les caractéristiques de base sont identiques au mode de réalisation précédemment décrit.

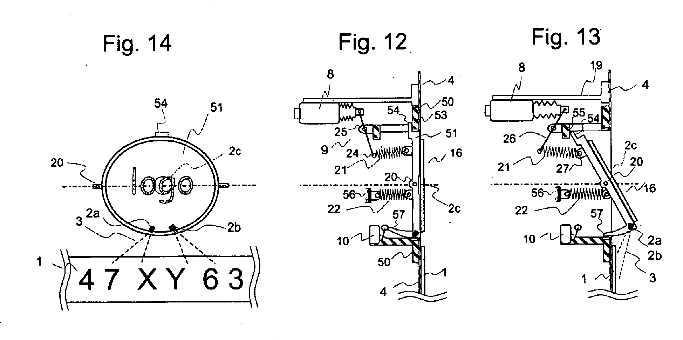

La **figure 12** représente une vue en coupe du dispositif à l'état de repos. L'élément mobile principal est un basculeur 51 qui pivote autour de l'axe 20. Le basculeur 51 est à sa position de repos, rappelé par le ressort 22. Ce ressort 22 travaille en traction, et est ancré sur un support fixe 56. La butée 54 du basculeur porte sur le support 50 dans la zone 53. Ce rappel contre la butée permet de garantir une très bonne planéité entre le basculeur et la peau de carrosserie 4.

La plaque de police 1 est fixée sous le dispositif, à même la peau de carrosserie 4. Le switch 10 est fixé sur le support 50 et est actionné par l'extrémité 57 du la partie interne du basculeur. Les éléments de motorisation 8 et de transmission 9 sont à l'état de repos et le ressort 21 est également sans contrainte.

La **figure 13** représente une vue en coupe du même dispositif à l'état actif. La différence par rapport à la figure précédente est que l'actionneur 8 est en position sortie, la biellette 26 a pivoté autour du point de rotation 25. L'autre extrémité de la biellette 26 est attaché au point 24 sur une extrémité du ressort 21. L'autre extrémité du ressort 21 est fixée au basculeur par l'oeil 27. La course du basculeur est limitée par la butée 54 qui vient en contact de la zone 55 du support 50.

L'actionneur 8 est fixé sur le support 19.

Dans la partie basse du basculeur sont situées les Leds 2a et 2b d'éclairage qui illuminent la plaque de police 1 au moyen du faisceau lumineux 3. Le basculeur possède une partie perpendiculaire qui se termine par la zone 57 et qui sert à obturer la zone inférieure pour éviter qu'un objet ne puisse pénétrer dans le dispositif.

Le ressort 22 est en légère extension mais son action est inférieure à l'action exercée par le ressort 21.

La **figure 14** représente une vue axiale du même dispositif, vu de l'extérieur. La disposition des Leds 2a et 2b permet d'avoir une bonne couverture lumineuse de la plaque de police 1. Ceci est un exemple non limitatif : la position et le nombre des Leds peuvent être adaptés au besoin. On voit aussi que la forme du basculeur 51 est ovale dans cet exemple non limitatif, dans la mesure où cette forme peut être quelconque et notamment être adaptée à la forme du logo de la marque. La Led 2c est positionnée sensiblement au milieu du basculeur, pour éclairer le logo au travers de la pièce translucide 14.

### AVANTAGES DE L'INVENTION

La solution présentée permet de supprimer le renfoncement habituel de la carrosserie nécessaire pour positionner et éclairer la plaque de police. Cette invention ouvre la voie pour révolutionner le style arrière de futurs véhicule automobiles.

L'invention permet de proposer une solution qui conjugue les 3 avantages suivants :
- elle autorise une forme un style très lisse substantiellement sans creux ni saillie
- elle s'adapte à différentes tailles de plaque de police
- elle est compatible avec les plaques de police standard des grands marchés mondiaux

## Revendications

1. Dispositif escamotable d'éclairage pour plaque de police de véhicule automobile, comportant
- un support (13;50) apte à être fixé à la carrosserie (4) du véhicule automobile,
- une structure mobile (6 ;51) par rapport au support comprenant des moyens de génération (2a,2b) d'un faisceau d'éclairage (3), ladite structure mobile (6 ;51) pouvant être déplacée entre une position de repos rétractée (62), et une position active en extension,
- un piston (7) ou une biellette (26) faisant office d'organe intermédiaire déplacé grâce à un actionneur (8),
dispositif dans lequel la structure mobile (6 ;51) est adaptée pour présenter, dans sa position rétractée, une absence substantielle de saillie par rapport à la carrosserie (4) du véhicule automobile,
dans lequel ladite structure mobile (6 ;51) est, dans sa position active, en saillie (66) et permet de diriger le faisceau d'éclairage (3) vers la plaque de police (1), dans lequel la position rétractée et la position en extension sont mécaniquement stables en l'absence d'énergie électrique,
dans lequel l'extension est automatique et générée avec la même alimentation électrique (+L) que celle des moyens de génération du faisceau d'éclairage
dans lequel la rétraction est automatique lors de la disparition de l'alimentation de la tension d'éclairage (+L),
**caractérisé en ce que** ledit dispositif comprend un ressort (11 ;21) interposé entre l'organe intermédiaire (7 ;26) et ladite structure mobile (6 ;51), de telle sorte que, lorsque la structure mobile (6 ;51) est en position active en extension, elle peut être repoussée vers la position de repos (62) par une action extérieure avec retour automatique dès que l'action cesse.

2. Dispositif d'éclairage selon la revendication 1, dans lequel la structure mobile (6) est un coulisseau et le piston (7) est reçu coulissant dans ladite structure mobile (6).

3. Dispositif d'éclairage selon l'une quelconque des revendications 1 à 2, **caractérisé en ce qu'**il est alimenté par seulement 2 conducteurs électriques, le conducteur d'alimentation (+L) des feux de position et la masse et comporte une capacité réservoir (86) utilisée comme réserve d'énergie pour la phase rétraction.

4. Dispositif d'éclairage selon l'une quelconque des revendications 1 à 3, **caractérisé en ce que** les moyens de génération du faisceau d'éclairage comprend des diodes électroluminescentes (2a,2b).

5. Dispositif d'éclairage selon l'une quelconque des revendications 1 à 4, **caractérisé en ce que** le dispositif porte en outre le logo (16) de la marque sur la face externe.

6. Dispositif d'éclairage selon la revendication 5, **caractérisé en ce que** le dispositif porte en outre une mise en valeur du logo (16) de la marque par des moyens d'éclairage lumineux (2c).

## Claims

1. Retractable lighting device for automotive vehicle license plate, comprising
- a support (13;50) adapted to be fixed to the body (4) of the automotive vehicle,
- a mobile structure (6;51) relative to the support, comprising means of generation (2a,2b) of a lighting beam (3), said mobile structure being adapted to be moved between a rest retracted position and an active extended position,
- a piston (7) or a linkage (26) forming an intermediate member moved by an actuator (8),
wherein the mobile structure (6;51) is adapted to exhibit, in the retracted position, a substantial absence of protrusion relative to the body (4) of the automotive vehicle,
wherein the mobile structure (6;51) is protruding (66) in its active position and allows to direct the lighting beam (3) toward the license plate (1),
wherein the retracted position and the active position are mechanically stable in absence of electrical energy,
wherein the extension is automatic and generated with the same power supply as the power supply of the means of generation of the lighting beam,
wherein the retraction is automatic together with the cutoff of the lighting power supply (+L),
**characterized in that** said lighting device comprises a spring (11 ;21) interposed between the intermediate member (7 ;26) and the mobile structure (6;51), whereby when the mobile structure (6;51) is in the active extended position, it can be moved toward the retracted position (62) by an exterior action with an automatic return as soon as the action ceases.

2. Retractable lighting device according to claim 1, wherein the mobile structure (6) is a slide and the piston (7) is slidingly received in said mobile structure (6).

3. Retractable lighting device according to any of the claims 1 to 2, **characterized in that** it is supplied by only two wires, the power supply wire (+L) of the marker lights and the ground, and comprises a reservoir capacitor (86) used as an energy reserve for the retraction phase.

4. Retractable lighting device according to any of the claims 1 to 3, **characterized in that** the means of generation of the lighting beam comprise Light Emitting Diodes (2a,2b).

5. Retractable lighting device according to any of the claims 1 to 4, **characterized in that** the device further bears the brand logo (16) on its external face.

6. Retractable lighting device according to claim 5, **characterized in that** the device further comprises a highlighting of the brand logo (16) by lighting means (2c).

## Patentansprüche

1. Einziehbare Beleuchtungsvorrichtung für ein Kennzeichenschild eines Fahrzeugs, umfassend :
- ein an der Karosserie (4) des Fahrzeugs (n) befestigbarer Träger (13;50),
- eine zu dem Träger bewegliche Struktur (6;51), umfassend Erzeugungmittel (2a,2b) eines Lichtkegels (3), wobei die bewegliche Struktur zwischen einer zurückgezogenen Ruhestellung und einer vorspringenden Aktivstellung verschiebbar ist,
- ein Kolben (7) oder eine Antriebsstange (26) als Zwischenorgan dienend, das mit einem Betätigungsgerät (8) verschiebbar kann,
wobei die bewegliche Struktur (6;51) in der zurückgezogenen Ruhestellung kein substantieller Vorsprung relativ der Karosserie (4) des Fahrzeugs vorstellt, wobei die bewegliche Struktur (6;51) in der Aktivstellung vorspringend ist, und sie (3) erlaubt, den Lichtkegel in Richtung des Kennzeichenschilds (1) zu führen, wobei die zurückgezogene Ruhestellung und die vorspringende Aktivstellung ohne elektrische Energie standsicher sind,
wobei die Ausdehnung automatisch ist und die mit der gleichen Stromversorgung (+L) wie der von der Erzeugungmittel des Lichtkegels geschafft wird,
wobei die Ziehung mit der Abschaltung der Lichtspannung automatisch ist, **dadurch gekennzeichnet, dass** die Beleuchtungsvorrichtung eine Feder umfasst, die zwischen dem Zwischenorgan (7;26) und der beweglichen Struktur (6;51) eingesetzt ist,
wobei, als die bewegliche Struktur (6;51) in der vorspringenden Aktivstellung ist, sie durch eine äußere Einwirkung nach der Ruhestellung (62) weggeschoben werden kann, und automatisch umkehrt, sobald die Einwirkung aufhört.

2. Beleuchtungsvorrichtung nach Anspruch 1, wobei die bewegliche Struktur (f)(6) ein Schieber (m) ist und der Kolben (m) (7) in die bewegliche Struktur (f)(6) verschiebbar eingesetzt ist.

3. Beleuchtungsvorrichtung nach einem der Ansprüche 1 bis 2, **dadurch gekennzeichnet, dass** sie nur durch zwei Leitungen, die Versorgungleitung (+L) des Standlichtes und die Masse, versorgt ist, und ein Speicherkondensator (m) als Energiereserve für die Ziehungphase aufweist.

4. Beleuchtungsvorrichtung nach einem der Ansprüche 1 bis 3, **dadurch gekennzeichnet, dass** die Erzeugungmittel des Lichtkegels (3) Leuchtdioden (2a,2b) aufweist.

5. Beleuchtungsvorrichtung nach einem der Ansprüche 1 bis 4, **dadurch gekennzeichnet, dass** die Beleuchtungsvorrichtung das Logo (16) der Firmenmarke an der äußeren Fläche weiterhin trägt.

6. Beleuchtungsvorrichtung nach Anspruch 5, **dadurch gekennzeichnet, dass** die Beleuchtungsvorrichtung eine Auswertung des Logos (16) der Firmenmarke durch Beleuchtungsmittel (2c) weiterhin trägt.
